# EUROPEAN PATENT SPECIFICATION

(11) **EP 3 481 172 B1**
(45) Date of publication and mention of the grant of the patent: **05.08.2020**
(21) Application number: 17730165.2
(22) Date of filing: 14.06.2017
(51) Int. Cl.: A01F 12/44

(54) **CROP PROCESSING APPARATUS IN A COMBINE HARVESTER**
MÄHDRESCHER MIT EINER VORRICHTUNG ZUM BEHANDELN DES ERNTEGUTES
MOISSONEUSE BATTEUSE AVEC UN DISPOSITIF DE TRAITEMENT DE RÉCOLTE

(30) Priority: 06.07.2016 GB 201611780
(43) Date of publication of application: 15.05.2019
(73) Proprietor: AGCO International GmbH, 8212 Neuhausen am Rheinfall (CH)
(72) Inventor: BILDE, Morten, 8930 Randers NØ (DK)
(74) Representative: AGCO Intellectual Property Department
(86) International application number: PCT/EP2017/064638
(87) International publication number: WO 2018/007115

(56) References cited:
- WO-A1-2012/097933
- WO-A1-2016/096839
- FR-A1- 2 452 863

## Description

### FIELD OF THE INVENTION

The invention relates to combine harvesters and particularly to systems for transferring crop material from threshing and separating apparatus to a grain cleaning unit. More specifically the invention relates to conveyance systems which include grain pans arranged to catch a crop stream, the grain pans being driven in an oscillating manner to convey the crop stream rearwardly to a grain cleaning unit.

### BACKGROUND OF THE INVENTION

The process for cleaning grain in combine harvesters has not changed fundamentally for many decades. The cleaning unit, or 'shoe', has directed therethrough a cleaning airstream which is typically generated by a cross-flow or centrifugal fan located in front of the cleaning shoe. As a mix of grain kernels, chaff, tailings and straw is passed over one or more oscillating sieves, the cleaning airstream serves to blow the lighter material in a generally rearward direction over the sieves and out of the rear of the machine. The grain is generally heavier and/or smaller than the material other than grain (MOG) in the mix and passes through the sieves.

The cleaning shoe is most efficient when the grain is caused to settle on the uppermost sieve (hereinafter referred to as the chaffer) as early as possible and the lighter material is kept airborne. If the grain bounces on impact with the chaffer then the risk of the cleaning airstream carrying the grain out of the rear of the shoe increases. The speed of the cleaning airstream is typically selected to strike a balance between grain cleanliness and acceptable loss. Ultimately, this balance creates a limit on the capacity of the cleaning unit. In other words, without an increase in shoe size, any increase in capacity will adversely affect grain cleanliness and/or loss rate.

However, despite these limits, there remains a continuing drive to increase the size and capacity of combine harvesters to meet the needs of modern farmers and to speed up the overall harvesting process. As outlined above, increasing the throughput of the cleaning shoe with known technology requires an increase in the physical size. For example, increasing the width of the cleaning shoe would deliver an increased machine capacity but at the cost of increased machine width. However, maximum machine width is limited by road transport legislation in some countries thus rendering this option unattractive. In a similar vein, increasing the length of the chaffer would require an increase in wheel base and a consequential increase in turn radius which is undesirable to farmers.

Efforts to increase the capacity of the cleaning shoe based on pre-stratification of the crop stream have been made. For example, WO-2012/095239, which is incorporated herein by reference, discloses a combine harvester having an extended return pan which catches separated crop material from overhead threshing and separating apparatus and conveys such to a front edge from where it drops on to a grain pan, the grain pan conveying the crop mix rearwardly to a rear edge from where it falls into the cleaning shoe. In this disclosure, the return pan is of an extended construction to deliver the majority of the separated material to the front of the grain pan to facilitate enhanced stratification of the material before delivery to the cleaning shoe. As disclosed therein, the recognised advantage is that the grain rich bottom layer falls directly onto the chaffer whereas the upper MOG-rich layer is rendered airborne by the cleaning airstream.

WO-2014/082890 discloses a plurality of fins having a saw-toothed upper edge provided in a row across the rear of the grain pan upon which the grain and MOG stratify before being presented to the cleaning shoe. However, it has been found that the fins inhibit stratification of the material on the pan because lateral movement is prevented to a large extent. FR2452863 discloses a grain pan with tines.

### SUMMARY OF THE INVENTION

In accordance with the invention there is provided a combine harvester comprising:
- a grain pan arranged to catch a crop stream, the grain pan being driven in an oscillating manner to convey the crop stream rearwardly to a rear edge;
- a cleaning unit comprising a fan for generating a cleaning airstream which is directed under the rear edge;
- the grain pan comprising a conveyance floor with a rippled floor profile, and;
- a plurality of tines secured at one end to the conveyance floor, each tine presenting a saw-toothed profile along an upper edge; characterised in that the conveyance floor has a profile of ridges and troughs, the troughs providing a plurality of longitudinal channels, wherein the tines are aligned with the ridges.

Advantageously, the tines serve to lift the lighter MOG-rich material away from the heavier grain-rich layer and enhance the vertical stratification upstream of the cleaning unit. The tines allow the grain-rich material more space to move on the pan which also enhances stratification. This is in contrast to vertical fins which present "dead" vertical walls to the stratified layers and which restrict lateral material flow and cause compacted areas.

The tines also offer a cost and weight reduction when compared to vertical fins.

Preferably the tines are able to flex so that distal ends thereof can move up and down with respect to the grain pan to which the tines are secured to an extent.

It should be understood that the term "saw-toothed profile" should be interpreted using the everyday meaning of "saw-tooth" in terms of the substantial shape of a saw-toothed wave, namely one comprising a gradual or long linear rise and a sudden or short linear fall in the direction of conveyance. It should also be understood that the term "tine" should be interpreted using the everyday meaning, namely an elongate prong or rod.

In one embodiment the conveyance floor has a profile of ridges and troughs as disclosed, for example, in WO-201/096839. The troughs provide a plurality of longitudinal channels, and the tines are preferably aligned with the ridges. The ridge and trough profile encourages stratification on the grain pan wherein the lighter MOG-rich material is lifted by the ridges whilst the grain settles into the troughs. By placing the tines in alignment with the ridges vertical separation of the MOG from the grain is further enhanced.

The tines preferably slope upwardly and rearwardly from the conveyance floor.

In another embodiment the tines extend rearwardly beyond the rear edge of the grain pan so as to carry the collected MOG upwardly and away from the rear edge well into the cleaning unit without degrading the effect of the cleaning airstream directed under the rear edge.

### BRIEF DESCRIPTION OF THE DRAWINGS

Further advantages of the invention will be apparent from reading the following description of a specific embodiment with reference to the appended drawings in which:
Figure 1 is a side elevation of combine harvester embodying one example construction of grain cleaning apparatus according to the invention and showing the outline of the combine in ghost form;
Figure 2 is vertical section through the grain cleaning apparatus of Figure 1;
Figure 3 is a lowered rear perspective view of the grain cleaning apparatus of Figure 1;
Figure 4 is a raised rear perspective view of the grain cleaning apparatus of Figure 1;
Figure 5 is a perspective view of a tine embodied in the grain cleaning apparatus of Figure 1; and,
Figure 6 is a side view of the tine of Figure 5.

### DETAILED DESCRIPTION OF A SPECIFIC EMBODIMENT

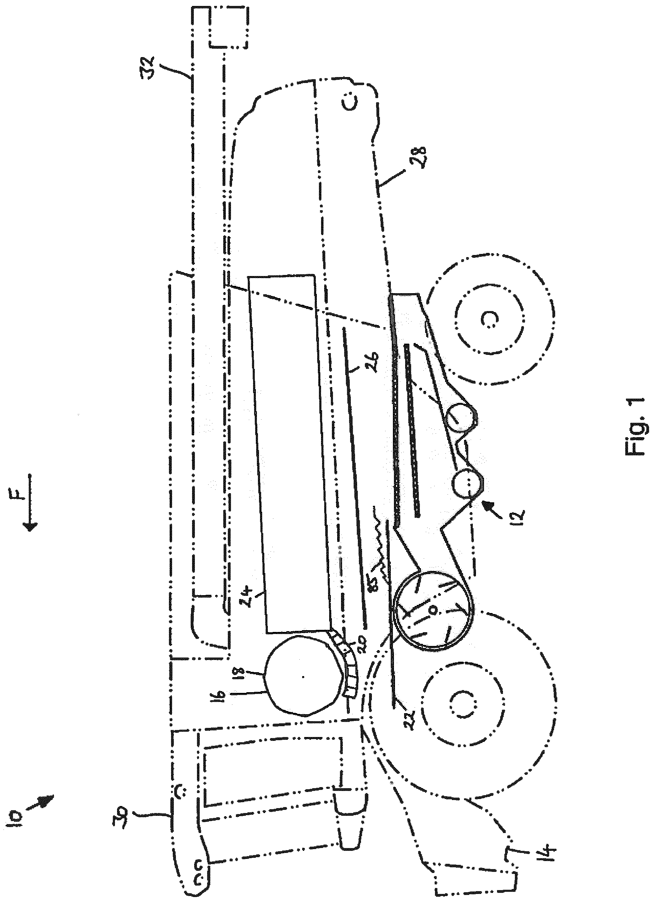

The invention will now be described in connection with a preferred embodiment. Relative terms such as front, rear, forward, rearward, left, right, longitudinal and transverse will be made with reference to the longitudinal vehicle axis of a combine harvester travelling in the normal direction of travel (indicated by arrow 'F' in Figure 1). The terms "direction of conveyance", "upstream" and "downstream" are made with reference to the general flow of crop material through the combine harvester.

With reference to Figure 1 a combine harvester 10 is shown in ghost form whilst the grain cleaning unit 12 embodied therein is shown with solid lines. Combine 10 includes a front elevator housing 14 at the front of the machine for attachment of a header (not shown). The header when attached serves to cut and collect the crop material as it progresses across the field, the collected crop stream being conveyed up through the elevator housing 14 into a cylindrical threshing unit which is represented schematically at 16.

At this stage the crop stream is unprocessed. It should be understood that combine harvesters are employed to harvest a host of different crops including cereal, rice, corn and grass seed. The following description will make reference to various parts of a cereal crop stream but it should be understood that this is by way of example only and does not by any means limit the applicability of the invention to harvesting other harvested crops.

In the example shown the crop processor is of a hybrid type comprising a cylindrical threshing unit and a pair of rotary, axial-flow, separating rotors. Although described in relation to a hybrid type processor it should be understood that alternative processors known in the art may be employed instead. For example, a conventional, tangential flow, threshing cylinder with downstream straw walkers may replace the processor shown. In yet another alternatives, pure axial or transverse threshing technology may be employed.

The threshing unit 16 includes a rotating cylinder 18 and a concave-shaped grate 20. The cylinder 18 includes rasp bars (not shown) which act upon the crop stream to thresh the grain or seeds from the remaining material, the majority of the threshed grain-rich material passing through the underlying grate 20 and onto a stratification pan 22.

The remainder of the crop material including straw, tailings and unthreshed grain are passed from the threshing unit 16 into separating apparatus represented at 24. The separating apparatus 24 includes two longitudinally-aligned rotors which rotate on an longitudinal axis and convey the crop stream rearwardly in a ribbon passing along a spiral path. The separating apparatus serve to separate further grain from the crop stream which passes through a grate-like structure onto an underlying return pan 26. The residue crop material, predominantly made up of straw, exits the machine at the rear 28. Although not shown in Figure 1, a straw spreader and/or chopper may be provided to process the straw material as required.

For completeness, the combine 10 includes a driver's cab 30 and an unloading auger 32, shown in the transport position in Figure 1.

The threshing and separating apparatus do not remove all MOG from the crop stream and the material collected by the stratification pan 22 and return pan 26 typically includes a proportion of straw, chaff, tailings and other unwanted material such as weed seeds, bugs, and tree twigs. The grain cleaning unit 12 is provided to remove this unwanted material thus leaving a clean sample of grain to be delivered to the tank.

The single return pan 26 may be replaced by a dual return pan arrangement such as that described in WO-2015/062965 for example. Alternatively, a continuously driven belt may be employed.

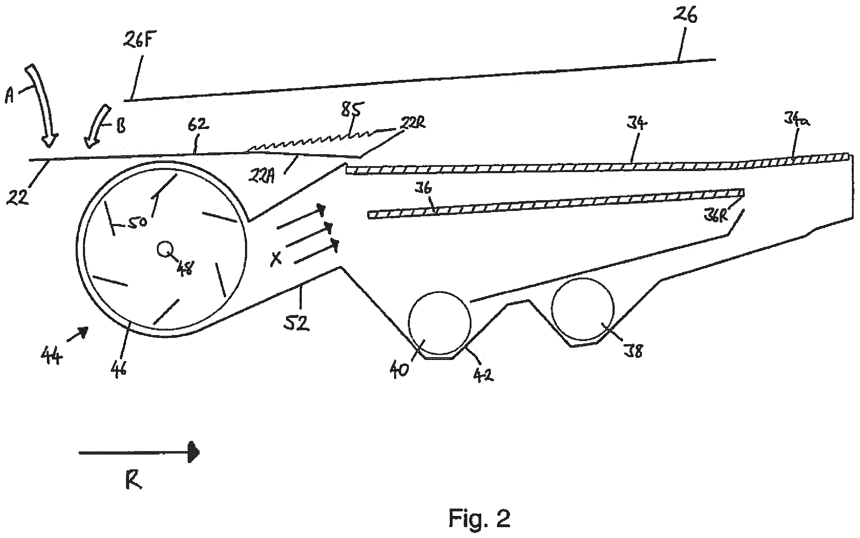

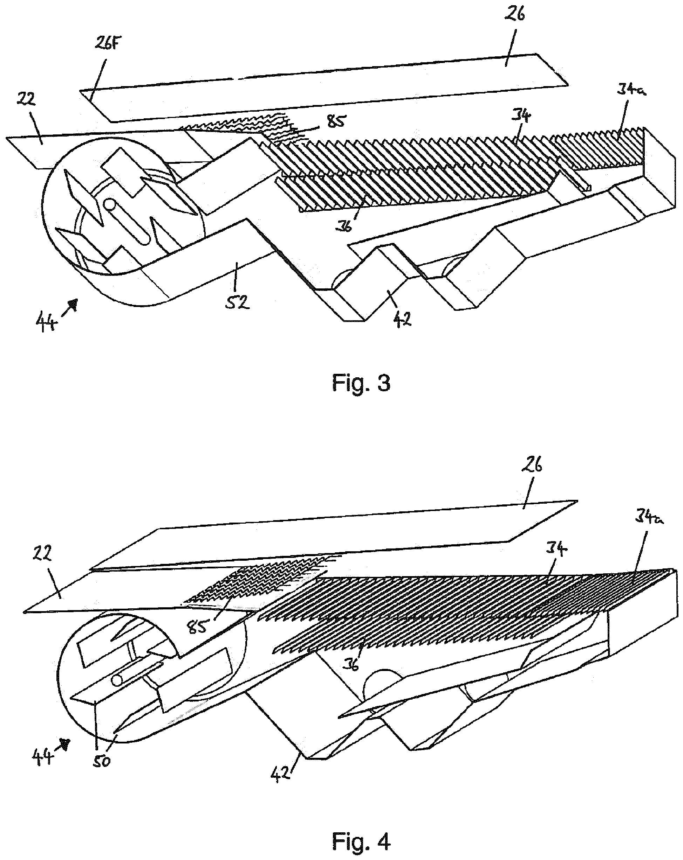

Turning to the detail of the grain cleaning unit 12, shown in Figures 2, 3 and 4, the stratification pan 22 and return pan 26 are driven in an oscillating manner as in known machines to convey the grain and MOG rearwardly. Although the drive and mounting mechanisms for the stratification pan 22 and return pan 26 are not shown, it should be appreciated that this aspect is well known in the art of combine harvesters and is not critical to disclosure of the invention.

The stratification pan 22 comprises a conveyance floor 62 with a rippled profile to facilitate rearward conveyance of the grain in combination with the oscillating driving motion.

As mentioned above, grain passing through concave grate 20 falls onto the front of stratification pan 22 indicated by arrow A in Figure 2. This material is conveyed rearwardly (in the direction of arrow R in Figure 2) by the oscillating motion of the stratification pan and the rippled profile thereof. Material passing through the grate of separator apparatus 24 falls onto the return pan 26 and is conveyed forwardly by the oscillating motion and the rippled profile thereof. When the material reaches the front edge 26F of return pan 26 it falls onto the stratification pan 22 and on top of the material conveyed from the threshing unit 16 and as indicated by arrow B. This conveyance and combination of two crop streams upstream of the cleaning unit is disclosed in WO-2012/095239 to which reference is invited.

The oscillating motion of thresher pan 22 conveys the combined crop streams rearwardly towards the rear edge 22R of stratification pan 22. Whilst conveyed across the stratification pan 22 the crop stream undergoes stratification wherein the heavier grain-rich material sinks to the bottom layers adjacent the floor of the stratification pan 22 and the lighter/larger MOG rises to the top layers.

Upon reaching the rear edge 22R, the crop stream falls onto a chaffer 34 which is also driven in a fore-and-aft oscillating motion. The chaffer 34 is of a known construction and includes a series of transverse ribs which create open channels or gaps therebetween. The chaffer ribs are angled upwardly and rearwardly so as to encourage MOG rearwardly whilst allowing the heavier grain to pass through the chaffer onto an underlying sieve 36.

Chaffer 34 includes an inclined rear section 34a. MOG which reaches the rear section 34a either passes over the rear edge and out of the machine or through the associated grate before being conveyed to a returns auger 38 for rethreshing in a known manner. It should be appreciated that the majority of materials passing through the rear section 34a is, and is intended to be, unthreshed tailings.

Grain passing through chaffer 34 is incident on sieve 36 which is also driven in an oscillating manner and serves to remove tailings from the stream of grain before being conveyed to on-board tank (not shown) by grain collecting auger 40 which resides in a transverse trough 42 at the bottom of the cleaning unit 12. Tailings 'blocked' by sieve 36 are conveyed rearwardly by the oscillating motion thereof to a rear edge 36R from where the tailings are directed to the returns auger 38 for reprocessing in a known manner.

The grain cleaning unit 12 further comprises a fan unit 44 for generating a cleaning air stream which is directed through the falling grain/chaff stream as it falls from edge 22R, and through the sieve 36 and chaffer 34. The fan unit 44 includes a fan 46 which rotates on a transverse axis 48 in a known manner. The fan 46 includes a plurality of impellor blades which draw in air from the transverse ends open to the environment and generate an air stream directed through channel 52 in a generally rearward direction. The air stream (designated generally by arrows X) creates a pressure differential across the chaffer 34 and sieve 36 to encourage lighter MOG rearwardly and upwardly whilst allowing the grain to pass through the chaffer 34 and the sieve 36. Although not shown in Figure 2, it should be appreciated that the air stream X also passes above chaffer 34 and below stratification pan 22 thus acting upon the crop stream as it falls from the rear edge 22R of the stratification pan 22.

One aspect of the invention concerns the stratification pan 22 and the provision of enhanced stratification of the crop stream. In this regard a plurality of tines 85 are secured to the floor 62 of the stratification pan 22 to lift lighter material within the grain/chaff stream away from the heavier material and enhance stratification thereof.

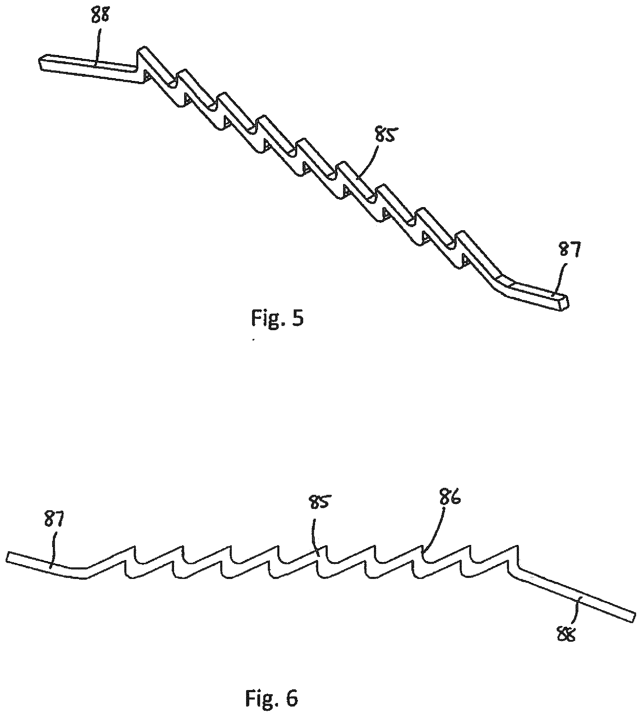

Shown in detail in Figures 5 and 6, each tine 85 has a saw-toothed profile and/or top edge 86 to enhance the rearward conveyance and increase the lifting effect provided in coordination with the oscillating movement of the stratification pan 22. Each tine 85 comprises a first straight section 87 at one end, and a second straight section 88 at the opposite end. Each tine 85 is secured to the grain pan floor 62 by welding or gluing along the respective first straight section 87.

The tine 85 project upwardly and rearwardly away from the grain pan floor 62 at an angle of approximately 15 degrees from the major floor surface.

As can be seen best in Figure 2, the tines 85 project rearwardly beyond the rear edge 22R of the thresher pan 22 so as to carry the MOG further away from the main stream of grain falling from the rear edge 22R and onto chaffer 34.

The tines 85 are aligned longitudinally with respect to the direction of travel F. In the example shown the tines are disposed across the full width of the stratification pan 22 in a single transverse row and are spaced equidistantly from one another to provide a uniform effect.

The tines 85 may fabricated in a host of different ways. For example the tines may be cut from sheet steel using laser cutting or waterjet cutting, or moulded from plastic for example. The dimensions of the tines 85 are chosen so that the distal ends (not secured to the pan) are able to flex up and down with respect to the stratification pan 22. The saw-toothed profile along the upper edge of the tine 85 is mimicked along the underside or lower edge of the tine 85.

Although the embodiment described in relation to the drawings includes a return pan 26 with significant overlap with stratification pan 22, it is envisaged that the tines 85 provided in accordance with the invention can be employed in combine harvester cleaning apparatus having various different constructions including those with minimal or no overlap between the return pan and stratification pan 22.

In an alternative, not illustrated, embodiment the conveyance floor 62 has a profile of ridges and troughs, the troughs providing a plurality of longitudinal channels, wherein the tines are secured to the crests of the ridges. The ridge-to-trough height may increase in the direction of conveyance.

In summary, there is provided a combine harvester comprises a grain pan arranged to catch a crop stream. The grain pan is driven in an oscillating manner to convey the crop stream rearwardly to a rear edge from where the crop stream falls into a grain cleaning unit. A fan generates a cleaning airstream which is directed under the rear edge. The grain pan comprises a conveyance floor with a rippled floor profile. A plurality of tines are provided and secured at one end to the conveyance floor. Each tine has a saw-toothed profile to lift lighter material within the crop stream away from the heavier material and enhance stratification thereof.

## Claims

1. A combine harvester (10) comprising:
- a grain pan (22) arranged to catch a crop stream, the grain pan being driven in an oscillating manner to convey the crop stream rearwardly to a rear edge (22R);
- a cleaning unit (12) comprising a fan (46) for generating a cleaning airstream (X) which is directed under the rear edge (22R);
- the grain pan (22) comprising a conveyance floor with a rippled floor profile, and;
- a plurality of tines (85) secured at one end to the conveyance floor, each tine presenting a saw-toothed profile along an upper edge;
**characterised in that** the conveyance floor (62) has a profile of ridges and troughs, the troughs providing a plurality of longitudinal channels, wherein the tines (85) J Z are aligned with the ridges.

2. A combine harvester according to Claim 1, wherein the plurality of tines (85) each have a distal end remote said one end secured to the conveyance floor (62), and wherein the distal ends can flex up and down with respect to the conveyance floor.

3. A combine harvester according to Claim 1 or 2, wherein the ridge-to-trough height increases in the direction of conveyance.

4. A combine harvester according to any preceding claim, wherein the tines (85) slope upwardly and rearwardly from the conveyance floor.

5. A combine harvester according to any preceding claim, wherein said plurality of tines are spaced from one another in a row across the width of the grain pan (22).

6. A combine harvester according to Claim 5, wherein said plurality of tines (85) J Z are spaced equidistantly from one another.

7. A combine harvester according to any preceding claim, wherein the tines (85) extend rearwardly beyond the rear edge (22R) of the grain pan.

8. A combine harvester according to any preceding claim, wherein the tines (85) are formed from a plastic material.

9. A combine harvester according to any preceding claim, wherein the saw-toothed profile is mimicked along a lower edge of each tine (85).

## Patentansprüche

1. Mähdrescher (10), mit:
- einem Vorbereitungsboden (22), der zum Auffangen eines Erntegutstroms angeordnet ist, wobei der Vorbereitungsboden in einer oszillierenden Weise angetrieben ist, um den Erntegutstrom nach hinten zu einer Hinterkante (22R) zu fördern;
- einer Reinigungseinheit (12) mit einem Lüfter (46) zum Erzeugen eines Reinigungsluftstroms (X), der unter die Hinterkante (22R) gerichtet ist;
- wobei der Vorbereitungsboden (22) einen Förderboden mit einem geriffelten Bodenprofil aufweist; und
- einer Mehrzahl von Zinken (85), die an einem Ende des Förderbodens befestigt sind, wobei jede Zinke entlang einer Oberkante ein Sägezahnprofil ausbildet; **dadurch gekennzeichnet, dass**
der Förderboden (62) ein Profil mit Erhöhungen und mit Vertiefungen besitzt, wobei die Vertiefungen eine Mehrzahl von Längsnuten bilden, wobei die Zinken (85) zu den Erhöhungen ausgerichtet sind.

2. Mähdrescher nach Anspruch 1, wobei die Mehrzahl von Zinken (85) jeweils ein distales Ende entfernt zu dem Ende besitzen, das an dem Förderboden (62) befestigt ist, und wobei sich die distalen Enden relativ zu dem Förderboden nach oben und nach unten biegen können.

3. Mähdrescher nach Anspruch 1 oder 2, wobei der Höhenunterschied zwischen Erhöhungen und Vertiefungen in der Förderrichtung ansteigt.

4. Mähdrescher nach mindestens einem der vorhergehenden Ansprüche, wobei die Zinken (85) von dem Förderboden nach oben und nach hinten geneigt sind.

5. Mähdrescher nach mindestens einem der vorhergehenden Ansprüche, wobei die Mehrzahl von Zinken in einer Reihe über die Breite des Vorbereitungsbodens (22) zueinander beabstandet sind.

6. Mähdrescher nach Anspruch 5, wobei Mehrzahl von Zinken (85) gleichmäßig zueinander beabstandet sind.

7. Mähdrescher nach mindestens einem der vorhergehenden Ansprüche, wobei sich die Zinken (85) nach hinten über die Hinterkante (22R) des Vorbereitungsbodens hinaus erstrecken.

8. Mähdrescher nach mindestens einem der vorhergehenden Ansprüche, wobei die Zinken (85) aus einem Kunststoffmaterial ausgebildet sind.

9. Mähdrescher nach mindestens einem der vorhergehenden Ansprüche, wobei das Sägezahnprofil entlang einer Unterkante jeder Zinke (85) verläuft.

## Revendications

1. Moissonneuse batteuse (10) comprenant :
un plateau à grain (22) agencé de manière à recevoir un flux de récolte, le plateau à grain étant entraîné d'une manière oscillante afin de transférer le flux de récolte vers l'arrière, vers un bord arrière (22R) ;
une unité de nettoyage (12) comprenant un ventilateur (46) destiné à produire un courant d'air de nettoyage (X) qui est dirigé au-dessous du bord arrière (22R) ;
le plateau à grain (22) comprenant un plancher de transport avec un profil de plancher ondulé, et
une pluralité de dents (85) fixées au niveau d'une première extrémité sur le plancher de transport, chaque dent présentant un profil en dent de scie le long d'un bord supérieur ;
**caractérisée en ce que** le plancher de transport (62) présente un profil en arêtes et creux,
les creux formant une pluralité de canaux longitudinaux, dans laquelle les dents (85) sont alignées avec les arêtes.

2. Moissonneuse batteuse selon la revendication 1, dans laquelle les dents de la pluralité de dents (85) présentent chacune une extrémité distale distante de ladite première extrémité qui est fixée sur le plancher de transport (62), et
dans laquelle les extrémités distales peuvent fléchir vers le haut et vers le bas par rapport au plancher de transport.

3. Moissonneuse batteuse selon la revendication 1 ou 2, dans laquelle la hauteur entre arête et creux augmente suivant la direction de transport.

4. Moissonneuse batteuse selon l'une quelconque des revendications précédentes, dans laquelle les dents (85) sont inclinées vers le haut et vers l'arrière par rapport au plancher de transport.

5. Moissonneuse batteuse selon l'une quelconque des revendications précédentes, dans laquelle les dents de ladite pluralité de dents sont espacées les unes des autres sur une rangée suivant la largeur du plateau à grain (22).

6. Moissonneuse batteuse selon la revendication 5, dans laquelle les dents de ladite pluralité de dents (85) sont espacées de manière équidistante les unes des autres.

7. Moissonneuse batteuse selon l'une quelconque des revendications précédentes, dans laquelle les dents (85) s'étendent vers l'arrière au delà du bord arrière (22R) du plateau à grain.

8. Moissonneuse batteuse selon l'une quelconque des revendications précédentes, dans laquelle les dents (85) sont formées en une matière plastique.

9. Moissonneuse batteuse selon l'une quelconque des revendications précédentes, dans laquelle le profil en dent de scie est reproduit suivant un bord inférieur de chaque dent (85).
